# EUROPEAN PATENT APPLICATION

(11) **EP 0 901 919 A1**
(43) Date of publication of application: **17.03.1999**
(21) Application number: 98202954.8
(22) Date of filing: 03.09.1998
(51) Int. Cl.: B60J 7/057

(54) **Open roof contruction for a vehicle**

(30) Priority: 10.09.1997 NL 1006985
(71) Applicant: Inalfa Industries B.V., 5804 AB Venray (NL)
(72) Inventor: Manders, Christiaan Leonardus Johannes, 5961 SM Horst (NL); Boersma, Egbert, 5708 CR Helmond (NL)
(74) Representative: Metman, Karel Johannes

(57) **Abstract**

An open roof construction for a vehicle comprises a closing element for selectively opening or closing an opening in the fixed roof. A guide rail is intended for slidingly guiding a slide of a mechanism and for guiding an elongated driving element, such as a cable, which is fitted with a coupling element, which coupling element is connected to the slide. The coupling element is an element which projects in lateral direction from said elongated driving element, and which comprises a front flat surface and a rear flat surface, which abut against an associated flat surface of the slide. The flat surfaces of the coupling element and the slide abut against each other under pre-tension, in order to prevent play and compensate for wear, whilst the assembly can still be carried out in a simple manner.

## Description

The present invention relates to an open roof construction for a vehicle according to the preamble of claim 1.

In most types of an open roof construction which is fitted with cable drive (cf. e.g. DE-A-34 28 919), the slide is provided with a lateral projection comprising a longitudinal channel, in which a reduced portion of the cable fits, such that portions of the cable at both ends of the reduced portion abut against the lateral projection of the slide, and the cable can thus drive the slide so as to move it.

The drawback of this known structure is the fact that this connection of the cable to the slide is subjected to wear, and that consequently wear will occur relatively quickly, which has an adverse effect on the precision with which the slide is driven.

With an open roof construction according to the preamble of claim 1 (EP-A-0 480 166), a laterally projecting element of the driving cable is inserted in the opening of a slide of plastic material, but also in this case undesirable play occurs. Said play is necessary in order to be able to fit the coupling element of the cable in the slide opening, taking into account any tolerances.

The object of the present invention is to provide an open roof construction wherein the above-described drawbacks have been overcome in an efficient manner.

In order to accomplish that objective, the open roof construction according to the invention is characterized in that the flat surfaces of the coupling element and the slide abut against one another under pre-tension.

This aspect makes it possible to fit the coupling element in the slide without any play, or even with negative tolerances, since the projecting element of the coupling element can be fitted in the opening against said pre-tension. Furthermore, any wear is offset by the movement of the surfaces that are under pre-tension. Said surfaces may be formed on lips provided adjacently to the opening, for example, which lips are resiliently movable.

The invention will be explained in more detail hereafter with reference to the drawing, which is a highly schematic representation of an embodiment of the open roof construction according to the invention.

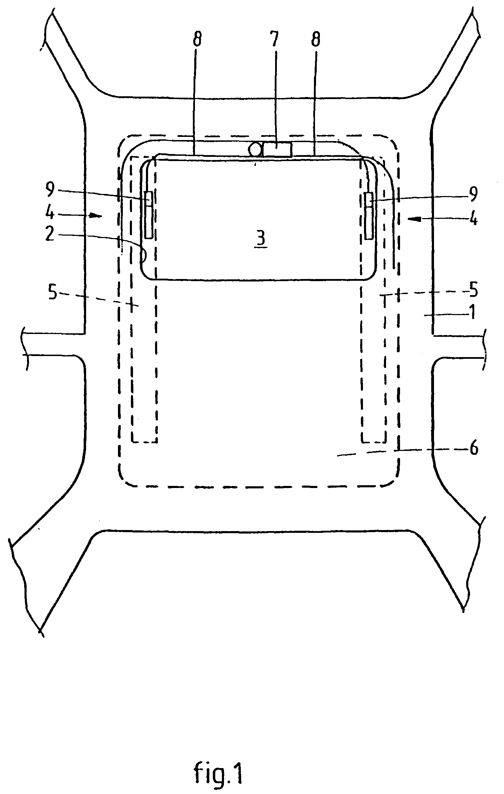

Fig. 1 is a highly schematic plan view of a vehicle comprising an open roof construction according to the invention.
Fig. 2 is a larger-scale, perspective view of detail II in Fig. 1.
Fig. 3 is a view corresponding with Fig. 2, wherein parts are shown in exploded view.
Fig. 4 is a sectional view along line IV-IV in Fig. 1.
Fig. 5 is a sectional view along line V-V in Fig. 2.

The drawing shows a roof 1 of a vehicle, in particular a motor vehicle, such as a passenger car. Said fixed roof 1, which may form part of the vehicle or of an open roof construction, is provided with a roof opening 2, which can be closed by a closing element 3 of the open roof construction. In the illustrated case, closing element 3 consists of a rigid panel, but it may have the most widely varying forms, such as the flexible cover of a folding roof, slats, etc.

In this embodiment, closing element 3 is movably supported on both long sides by a mechanism 4 which is slidably supported in longitudinal direction in stationary guide rails 5 arranged on both longitudinal sides of the roof opening 2. Said stationary guide rails 5 may be mounted on or form part of a frame 6 of the open roof construction, but the stationary guide rails 5 may also be mounted directly on fixed roof 1.

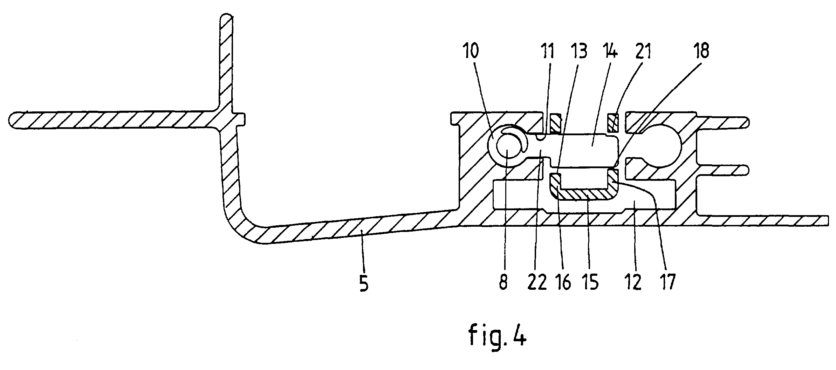

Mechanisms 4 are driven by means of a manual crank, or, as is illustrated in the present case, by means of an electric motor 7, which engages a slide 9 forming part of mechanisms 4 via cables 8, which are rigid in the direction in which pressure is exerted. Cables 8 as well as slide 9 are movably accommodated in stationary guide rail 5, as is also shown in Fig. 4. As can be seen, cable 8 runs in a longitudinal cavity 10, which communicates via a longitudinal opening 11 with a groove 12 for guiding the slide 9 .

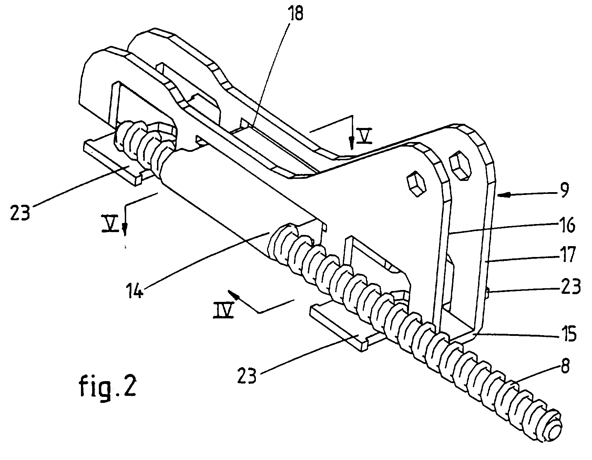

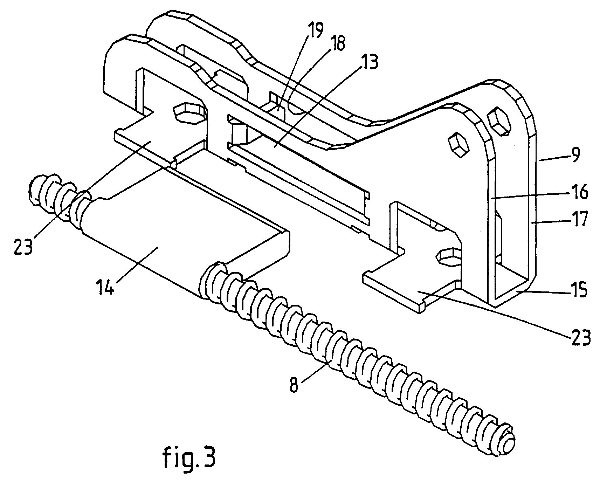

As is shown in the figures, and in particular Figs. 2 and 3, slide 9 is formed as a punched-out and bent metal plate portion, which is provided with an opening 13 for receiving a laterally projecting coupling element 14, which is formed on cable 8. Coupling element 14 consists of a substantially rectangular block and is preferably made of plastic material and it is formed round cable 8 by injection moulding, so that it is integral therewith.

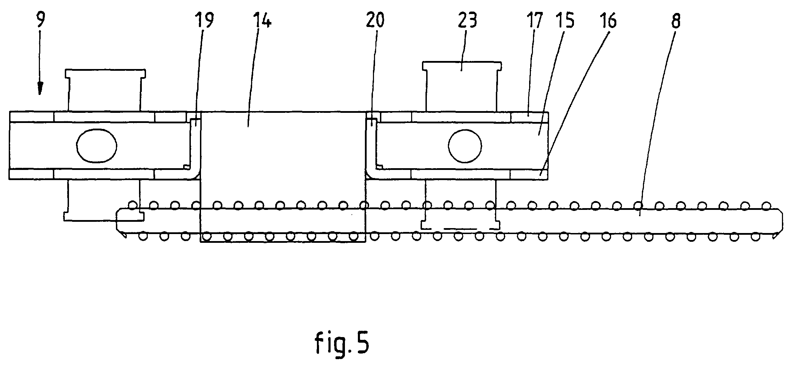

As is shown in Figs. 2 - 4, the metal plate portion of slide 9 is bent to form a U-shape comprising a lower web 15 and legs 16 and 17. The opening 13 for coupling element 14 is thereby formed in leg 16, whilst leg 17 comprises an opening 18, which is substantially aligned with opening 13. As is shown in particular in Figs. 3 and 5, lips 19 and 20 extending from opening 13 are bent from leg 16 of slide 9, through an angle of slightly less than 90° (not shown), whereby said lips form the boundaries, seen from above, of openings 13 and 18 in slide 9 for receiving coupling element 14. As can be seen, coupling element 14 comprises relatively large flat surfaces at the front end and at the rear end, which, in mounted condition, abut lips 19 and 20 once the coupling element 14 is inserted into slide 9, and that under pre-tension as a result of the fact that said lips 19 and 20 are bent through an angle of less than 90°. As a result of the abutment of said large surfaces and the pre-tension of lips 19 and 20 against coupling element 14, an engagement free from play between the coupling element 14 of cable 8 and slide 9 is ensured, also over a prolonged period of time.

Fig. 4 furthermore shows that opening 13 in leg 16 of slide 9, adjacent to cable 8 in downstream direction, is slightly larger than opening 18 in leg 17, thus enabling a slight tilting movement between coupling element 14 and slide 9 for the purpose of absorbing tolerances in the corners, whilst it furthermore simplifies the assembly of the construction. A small downward step 21 on the lateral end of coupling element 14 provides play in vertical direction with respect to opening 18, again for the purpose of simplifying assembly and absorbing tolerances. Fig. 4 furthermore shows that a thinner part 22 of coupling element 14 extends through longitudinal opening 13 between longitudinal cavity 10 for cable 8 and groove 12 for slide 9.

The horizontal, laterally projecting feet 23 are intended for fitting sliding shoes (not shown) for slide 9 thereover. The sliding shoes of the front and rear feet 23 of slide 9 may be interconnected by resilient elements which take up play, so as to additionally prevent play occurring in slide 9.

From the foregoing it will be apparent that the invention provides an open roof construction wherein the connection between the cable and the driving slide can be effected without any play or with a controlled amount of play, even for a prolonged period of time, with only a minimum amount of parts being required for the connection between the cable and the slide, whilst the slide itself can also be manufactured in a simple and inexpensive manner.

The invention is not limited to the above-described embodiment as shown in the drawing, which can be varied in several ways within the scope of the invention. Thus, it is also possible to provide only one guide rail. Furthermore it is possible to form the slide of a different material or in a different manner. Another possibility is to form the cable with ribs other than helical ribs, for example radial ribs, or not to use ribs at all. Instead of using a cable, it is also possible to use a rod or the like. Furthermore it would be possible for the coupling element to project in upward or downward direction, rather than in lateral direction. The surfaces being under pre-tension may also be formed on insert pieces made of spring steel, which may be mounted on the coupling element or in the slide.

## Claims

1. An open roof construction for a vehicle comprising a closing element (3) for selectively opening or closing an opening (2) in the fixed roof (1), a guide rail (5) for slidingly guiding a slide (9) of a mechanism (4) and for guiding an elongated driving element, such as a cable (8), which is fitted with a coupling element (14) which is connected to the slide (9), wherein the coupling element (14) is an element which projects in lateral direction from said elongated driving element (8), and which comprises a front flat surface and a rear flat surface, which abut against an associated flat surface of said slide (9), **characterized in that** the flat surfaces of said coupling element (14) and said slide (9) abut against each other under pre-tension.

2. An open roof construction according to claim 1, wherein said coupling element (14) is a block projecting to one side, which is preferably made of plastic material and which is formed round the cable by injection moulding.

3. An open roof construction according to claim 2, wherein said coupling element (14) is inserted in a lateral opening (13, 18) formed in said slide (9).

4. An open roof construction according to any one of the preceding claims, wherein said slide is formed of a metal plate, preferably by bending.

5. An open roof construction according to claim 4, wherein the opening (13, 18) for the coupling element (14) is formed by bending over lips (19, 20) which form the front and rear flat surfaces of said slide (9).

6. An open roof construction according to claim 5, wherein said lips (19, 20) are bent through slightly less than 90°.

7. An open roof construction according to claim 5 or 6, wherein the metal plate of said slide (9) is bent to form a U-shape, wherein the coupling element (14) extends through openings (13, 18) in the two legs (16, 17) of said U-section.

8. An open roof construction according to claim 7, wherein the openings (13, 18) in the two legs (16, 17) of said slide (9) allow play in vertical direction for the coupling element (14), and wherein the opening (13) positioned near said cable (8) preferably exhibits some play at the bottom side and wherein the opening (18) remote from said cable (8) preferably exhibits some play at the upper side.

9. An open roof construction according to any one of the preceding claims, wherein the cable (8) is accommodated in a longitudinal cavity (10) of the guide rail (5), which longitudinal cavity comprises a longitudinal opening (11) in the direction of a groove (12) for said slide (9), whilst the height of the coupling element (14) at the location of said longitudinal opening (11) is smaller than that of the part of the coupling element (14) that projects outside said longitudinal opening.

10. An open roof construction for a vehicle comprising a closing element (3) for selectively opening or closing an opening (2) in the fixed roof (1), a guide rail (5) for slidingly guiding a slide (9) of a mechanism (4) and for guiding an elongated driving element, such as a cable which is fitted with a coupling element (14) which is connected to the slide (9), wherein said coupling element (14) is an element which projects in lateral direction from said driving element (8), and which is inserted in a lateral opening (13, 18) formed in said slide (9), **characterized in that** said projecting element of said coupling element (14) and said slide (9) abut against each other under a pre-tension in the direction of the drive.
